Europäisches Patentamt

(19) European Patent Office

Office européen des brevets

(11) Numéro de publication : **0 117 791**
B1

(12) FASCICULE DE BREVET EUROPÉEN

(45) Date de publication du fascicule du brevet :
06.05.87

(51) Int. Cl.⁴ : **B 65 G 17/42**

(21) Numéro de dépôt : 84400222.0

(22) Date de dépôt : 02.02.84

(54) Dispositif de fixation de godets sur la bande d'un transporteur, notamment d'un élévateur à godets.

(30) Priorité : 11.02.83 FR 8302207

(43) Date de publication de la demande :
05.09.84 Bulletin 84/36

(45) Mention de la délivrance du brevet :
06.05.87 Bulletin 87/19

(84) Etats contractants désignés :
AT BE DE GB IT NL SE

(56) Documents cités :
DE-A- 2 732 932
FR-A- 690 582
FR-A- 1 475 928
US-A- 3 174 616

(73) Titulaire : FIVES-CAIL BABCOCK, Société anonyme
7 rue Montalivet
F-75383 Paris Cedex 08 (FR)

(72) Inventeur : Chever, René
75, boulevard de Picpus
F-75012 Paris (FR)

(74) Mandataire : Fontanié, Etienne
FIVES-CAIL BABCOCK 7, rue Montalivet
F-75383 Paris Cedex 08 (FR)

## Description

La présente invention a pour objet un dispositif de fixation des godets sur la bande d'un élévateur à godets au moyen d'attaches comprenant une plaque fixée sur la bande et un élément solidaire de la plaque et extérieur à la bande, chaque godet étant fixé sur la bande au moyen de deux attaches espacées l'une de l'autre le long de la bande.

Le document DE-A-2.732.932 décrit un dispositif de fixation de ce type dans lequel la partie avant d'un godet est articulée sur l'une des attaches et la partie arrière du même godet est liée par une bielle ou par une articulation coulissante à l'autre attache, les deux attaches d'un godet étant distinctes des attaches du godet suivant. Avec ce dispositif de fixation, chaque attache est soumise à un effort ayant une composante perpendiculaire au plan de la bande qui a tendance à arracher l'attache et à déchirer la bande.

Le document FR-A-1.475.928 montre un élévateur à godets dans lequel le fond de chaque godet est fixé sur un axe dont chaque extrémité est portée par un maillon de la chaîne d'entraînement adjacente et la partie supérieure du godet suivant est reliée par une bielle, sur chacun de ses côtés, à l'axe d'articulation dudit maillon. Comme le document précédent, ce document enseigne d'utiliser pour chaque godet des attaches distinctes de celles du godet suivant et l'application de cette solution à la fixation du godet sur une bande ne permettrait pas de supprimer l'inconvénient signalé au sujet de ce premier document.

L'invention a pour but de supprimer ou du moins réduire notablement les efforts perpendiculaires au plan de la bande au niveau des attaches des godets sur la bande en exerçant sur chaque attache une force égale, en grandeur et sens, au poids d'un godet et de son contenu.

Le dispositif de fixation objet de la présente invention est caractérisé en ce que la partie arrière d'un godet est articulée autour d'une première articulation sur l'élément extérieur d'une attache, en ce que la partie avant du godet qui le suit dans le sens du transport est articulée autour d'une deuxième articulation à l'extrémité d'une bielle dont l'autre extrémité est articulée autour d'une troisième articulation sur ledit élément ou sur une appendice du godet précédent situé à l'arrière de celui-ci, et en ce que la disposition relative des axes desdites première et troisième articulations et leurs positions par rapport à la bande sont telles que le couple exercé sur la bande, au niveau de l'attache, est réduit et éventuellement supprimé.

Les axes desdites première et troisième articulations portés par l'élément extérieur des attaches peuvent être également distants de la bande.

Le dimensionnement de l'attache répondra avantageusement à la condition définie par la formule

$$P \times a = F \times b$$

dans laquelle :

a est la distance à la bande de l'axe de l'articulation de la partie arrière du godet sur l'attache,

b est la distance de l'axe de ladite articulation à la bielle afférente à l'attache quand la bande est verticale,

P est le poids du godet et de son contenu, et

F est l'effort qui s'exerce sur l'articulation de la bielle à l'attache.

L'invention sera mieux comprise en se référant à la description qui suit, faite en regard des dessins annexés concernant plusieurs formes particulières de l'invention, données à titre d'exemples non limitatifs.

La figure 1 représente un tronçon vertical d'un élévateur à godets selon l'invention.

La figure 2 est une vue partielle de la figure 1 concernant un seul godet.

La figure 3 est une vue analogue à la précédente, illustrant les sollicitations auxquelles sont soumises les articulations.

La figure 4 est une vue semblable à la figure 2 relative à une variante de réalisation.

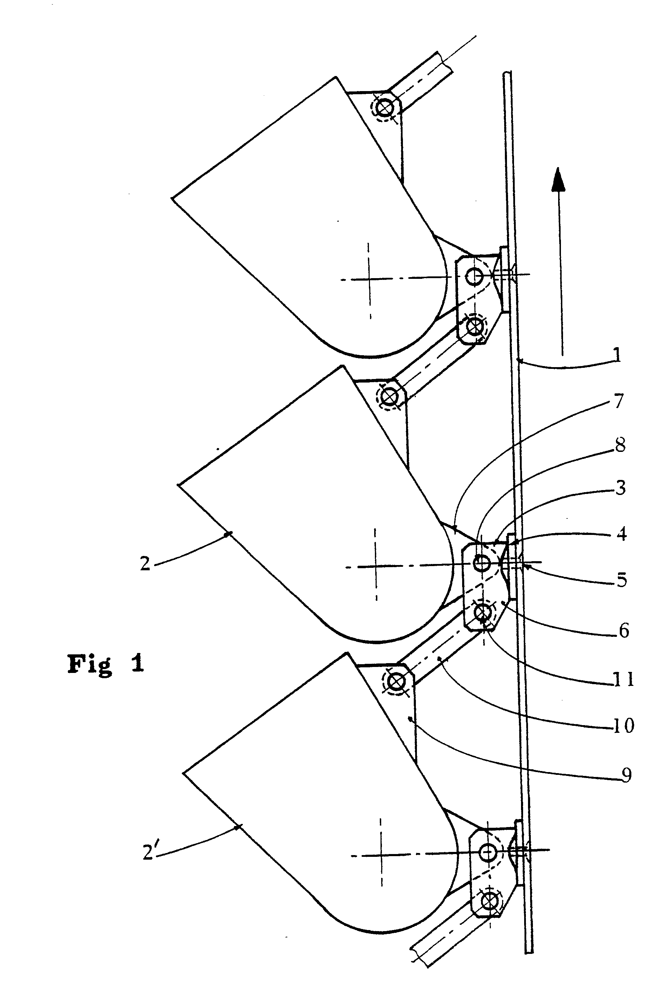

Sur les figures 1, 2 et 3, le repère 1 désigne une bande sans fin, courroie par exemple, le long de laquelle sont montés des godets tels que 2. Chacun de ces godets est fixé à la bande 1 par un système d'attaches dont on va parler plus explicitement ci-après. Chaque attache, repérée 3 dans son ensemble, comprend une plaque 4 disposée transversalement par rapport à la bande 1 à laquelle elle est fixée par tout moyen usuel, vis 5 par exemple. Chaque attache 3 comprend en outre, un élément 6, extérieur à la bande 1 et solidaire de la plaque 4. Ledit élément 6 est avantageusement réalisé par un plat disposé longitudinalement par rapport à la bande et perpendiculairement à celle-ci. La partie arrière du godet 2 présente un appendice 7 par l'intermédiaire duquel le godet 2 est articulé en 8 sur l'élément 6.

Le godet 2' qui suit le godet 2 dans le sens du transport, présente à sa partie avant, un appendice 9 sur lequel vient s'articuler l'une des extrémités d'une bielle 10. L'autre extrémité de ladite bielle vient s'articuler en 11 sur l'élément 6.

Les axes des articulations 8 et 11 peuvent être prévus à égale distance « a » (voir figure 3) de la bande 1. L'axe de l'articulation 8 est prévu à une distance « b » de la bielle 10, sur toute la longueur des parcours rectilignes ascendant et descendant du godet 2.

L'attache est dimensionnée de telle sorte que soit remplie la condition :

$$P \times a = F \times b$$

P représentant le poids du godet 2 et de son contenu, et F représentant l'effort qui s'exerce sur l'articulation 11, et l'effort égal et de direction opposée qui s'exerce sur l'articulation 8. On voit que lorsque la condition ci-dessus est remplie, on parvient à supprimer, au niveau de l'attache 3, le couple qu'exerceraient ces efforts sur la bande 1.

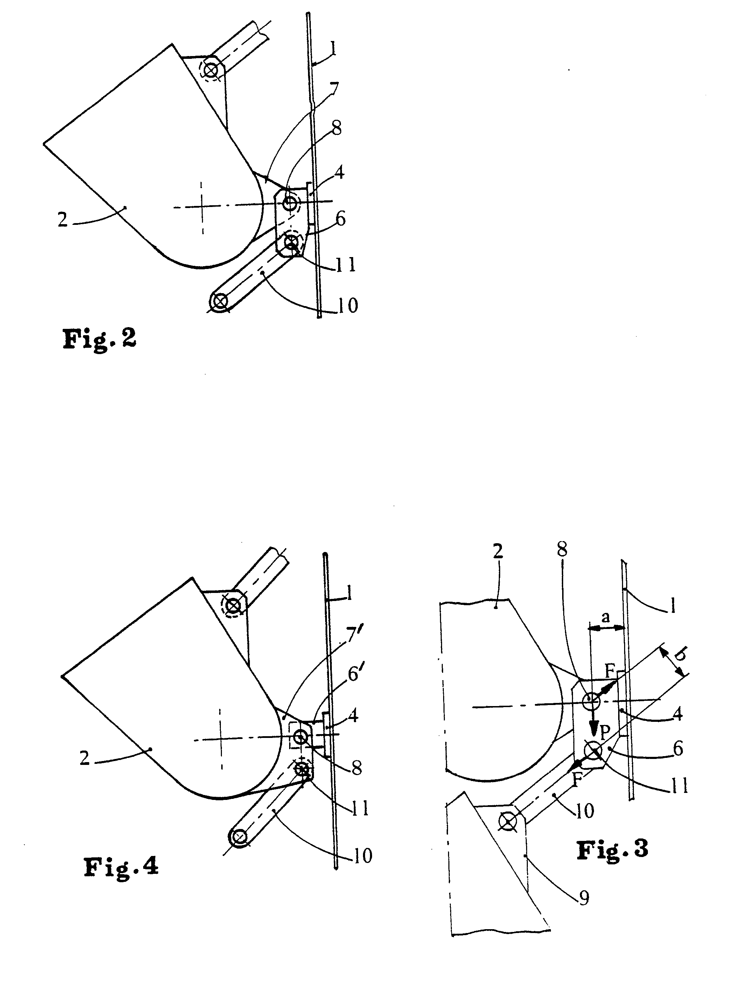

Suivant la forme de réalisation illustrée par la figure 4, l'élément de l'attache 3 est réduit à un simple support droit 6' sur l'extrémité duquel vient s'articuler en 8 la partie arrière du godet 2 par l'intermédiaire d'un appendice 7' qui est conformé pour supporter l'articulation 11 de la bielle 10. Les deux articulations 8 et 11 sont ici, comme dans le cas précédent, équidistantes de la bande 1.

On voit que, quelle que soit la forme de réalisation décrite, chaque attache à laquelle sont reliés deux godets successifs, est un élément rapporté ne faisant pas partie de l'élément de traction constitué par la seule bande. Cette disposition évite de transmettre à la bande les sollicitations individuelles auxquelles sont soumises les articulations des godets, certaines composantes de ces sollicitations s'annulant au niveau de la résultante.

L'invention doit être comprise indépendamment de la position des attaches, qui peuvent être fixées, soit en position centrale sur la bande, soit en regard sur les deux bords de celle-ci.

### Revendications

1. Dispositif de fixation des godets (2, 2') sur la bande (1) d'un élévateur à godets au moyen d'attaches (3), chaque godet étant fixé sur la bande au moyen de deux attaches (3) et chaque attache comprenant une plaque (4) fixée sur la bande (1) et un élément (6, 6') solidaire de la plaque (4) et extérieur à la bande (1), caractérisé en ce que la partie arrière d'un godet (2) est articulée autour d'une première articulation (8) sur l'élément extérieur (6, 6') d'une attache, en ce que la partie avant du godet (2') qui le suit dans le sens du transport est articulée autour d'une deuxième articulation à l'extrémité d'une bielle (10) dont l'autre extrémité est articulée autour d'une troisième articulation (11) sur ledit élément (6) ou sur un appendice (7') du godet précédent (2) situé à l'arrière de celui-ci, et en ce que la disposition relative des axes desdites première et troisième articulations (8, 11) et leurs positions par rapport à la bande sont telles que le couple exercé sur la bande, au niveau de l'attache, est réduit et éventuellement supprimé.

2. Dispositif suivant la revendication 1, caractérisé en ce que les axes desdites première et troisième articulations (8, 11) sont également distants de la bande (1).

3. Dispositif suivant la revendication 1 ou 2, caractérisé en ce que le dimensionnement de l'attache (3) répond à la condition définie par la formule $P \times a = F \times b$ dans laquelle :

a est la distance à la bande (1) de l'axe d'articulation (8) de la partie arrière du godet sur l'attache.

b est la distance de l'axe de ladite articulation à la bielle (10) afférente à l'attache quand la bande est verticale.

P est le poids du godet (2) et de son contenu.

F est l'effort qui s'exerce sur l'articulation (11) de la bielle (10) à l'attache (3).

### Claims

1. Bucket (2, 2') mounting device on the belt (1) of a bucket elevator using fasteners (3), each bucket being attached to the belt by two fasteners (3) and each fastener comprising a plate (4) fixed to the belt (1) and a component (6, 6') integral with the plate (4) and external to the belt (1), characterized by the fact that the rear part of a bucket (2) is hinged around a first articulation (8) to the external component (6, 6') of a fastener, by the fact that the front part of the bucket (2') which follows it in the conveying direction is hinged around a second articulation to the end of a rod (10) the other end of which is hinged around a third articulation (11) to the said component (6) or to an appendage (7') of the preceding bucket (2) located at the rear of the latter, and by the fact that the relative positions of the axes of the said first and third articulations (8, 11) and their positions with respect to the belt are such that the torque exerted onto the belt, at the fastener level, is reduced and possibly eliminated.

2. Device according to claim 1, characterized by the fact that the axes of the said first and third articulations (8, 11) are at a same distance from the belt (1).

3. Device according to claim 1 or 2, characterized by the fact that the dimensions of the fastener (3) meets the condition determined by the formule $P \times a = F \times b$, where :

a is the distance to the belt (1) of the axis of the articulation (8), onto the fastener, at the rear of the bucket.

b is the distance from the axis of the said articulation to the rod (10) relating to the fastener when the belt is vertical.

P is the weight of the bucket (2) and its contents.

F is the force exerted onto the articulation (11) of the rod (10) to the fastener (3).

### Patentansprüche

1. Vorrichtung zum Befestigen von Bechern (2, 2') an dem Förderband (1) eines Becherwerkes mittels Halterungen (3), wobei jeder Becher am Förderband mittels zwei Halterungen (3) befestigt ist und jede Halterung aus einer auf dem Förderband (1) befestigten Platte (4) und aus einem mit der Platte (4) kraftschlüssig verbundenen und ausserhalb des Bandes befindlichen Element (6, 6') besteht, dadurch gekennzeichnet, das der hintere Teil eines Bechers (2) um ein erstes Gelenk (8) auf dem äusseren Element (6, 6') einer Halterung gelenkig angebracht ist, dass der vordere Teil des in der Förderrichtung nachfolgenden Bechers (2') um ein zweites Gelenk an einem Ende einer Pleuelstange (10) gelenkig angebracht ist, deren anderes Ende um ein drittes Gelenk (11) auf dem Element (6) oder auf einem Ansatz (7') des vorgeordneten Bechers (2) am hinteren Teil desselben gelenkig angebracht ist, und dass die relative Anordnung der Achsen des ersten und des dritten Gelenkes (8, 11) und deren Stellungen dem Förderband gegenüber so sind, dass der im Bereich der Halterung auf dem Band ausgeübte Moment verringert und eventuell aufgehoben wird.

2. Vorrichtung nach Anspruch 1, dadurch gekennzeichnet, dass die Achsen des ersten und des dritten Gelenkes (8, 11) vom Förderband (1) gleich entfernt sind.

3. Vorrichtung nach Anspruch 1 oder 2, dadurch gekennzeichnet, dass die Dimensionierung der Halterung (3) der durch die Formel $P \times a = F \times b$ ausgedrückten Bedingung genügt, worin

a Entfernung der Gelenkachse (8) des hinteren Becherteils auf der Halterung vom Band (1),

b Entfernung der Achse des obenerwähnten Gelenkes von der zur Halterung zugehörigen Pleuelstange (10) bei vertikalen Band,

P Gewicht des Bechers und dessen Inhalts,

F Kraft, die auf das Gelenk (11) zwischen der Pleuelstange (10) und der Halterung (3) ausgeübt wird.

0 1 1 7 7 9 1

Fig 1

1

**Fig. 2**

**Fig. 4**

**Fig. 3**